# EUROPEAN PATENT SPECIFICATION

(11) **EP 4 027 588 B1**
(45) Date of publication and mention of the grant of the patent: **01.04.2026**
(21) Application number: 20877237.6
(22) Date of filing: 24.09.2020
(51) Int. Cl.: H04L 41/08, H04L 41/0266, H04L 41/0213

(54) **YANG MODEL MANAGEMENT METHOD, APPARATUS AND SYSTEM, DEVICE, AND STORAGE MEDIUM**
YANG-MODELLVERWALTUNGSVERFAHREN, GERÄT UND SYSTEM, VORRICHTUNG UND SPEICHERMEDIUM
PROCÉDÉ, APPAREIL ET SYSTÈME DE GESTION DE MODÈLES YANG, DISPOSITIF ET SUPPORT DE STOCKAGE

(30) Priority: 18.10.2019 CN 201910994980; 01.11.2019 CN 201911061600
(43) Date of publication of application: 13.07.2022
(73) Proprietor: Huawei Technologies Co., Ltd., Shenzhen, Guangdong 518129 (CN)
(72) Inventor: WANG, Zitao, Shenzhen, Guangdong 518129 (CN); WU, Qin, Shenzhen, Guangdong 518129 (CN); WU, Bo, Shenzhen, Guangdong 518129 (CN); ZHENG, Guangying, Shenzhen, Guangdong 518129 (CN)
(74) Representative: Isarpatent
(86) International application number: PCT/CN2020/117539
(87) International publication number: WO 2021/073395

(56) References cited:
- CN-A- 106 612 196
- CN-A- 107 302 443
- CN-A- 108 234 174
- CN-A- 109 951 315
- US-A1- 2019 190 779
- WILTON CISCO SYSTEMS R ET AL: "YANG Packages; draft-rwilton-netmod-yang-packages-01.txt", no. 1, 10 March 2019 (2019-03-10), pages 1 - 43, XP015131685, Retrieved from the Internet <URL:https://tools.ietf.org/html/draft-rwilton-netmod-yang-packages-01> [retrieved on 20190310]
- WILTON R RAHMAN CISCO SYSTEMS R ET AL: "YANG Schema Version Selection; draft-wilton-netmod-yang-ver-selection-00.txt", 11 March 2019 (2019-03-11), pages 1 - 16, XP015131975, Retrieved from the Internet <URL:https://tools.ietf.org/html/draft-wilton-netmod-yang-ver-selection-00> [retrieved on 20190311]
- BIERMAN YUMAWORKS A: "The YANG Package Statement; draft-bierman-netmod-yang-package-00.txt", THE YANG PACKAGE STATEMENT; DRAFT-BIERMAN-NETMOD-YANG-PACKAGE-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 6 July 2015 (2015-07-06), pages 1 - 21, XP015107247
- LINDA HORN: "PNF Software Upgrade Scenario 1 Controller to PNF Interface", 8 August 2019 (2019-08-08), XP055671440, Retrieved from the Internet <URL:https://wiki.onap.org/download/attachments/64007696/PNF%20SW%20Upgrade%20Proposal%20v2.pptx?version=1&modificationDate=1565624121000&api=v2&download=true> [retrieved on 20200225]
- "Network Functions Virtualisation (NFV) Release 2; Protocols and Data Models; VNF Package specification", vol. WG NFV SOL Solutions, no. V2.6.3, 28 August 2019 (2019-08-28), pages 1 - 26, XP014353005, Retrieved from the Internet <URL:docbox.etsi.org/ISG/NFV/Open/Drafts/SOL004ed271_VNF_Package_Stage_3-spec_/NFV-SOL004ed271v263/GS_NFV-SOL004ed271v020603-cm.docx> [retrieved on 20190828]
- ENNS R ET AL: "Network Configuration Protocol (NETCONF); rfc6241.txt", NETWORK CONFIGURATION PROTOCOL (NETCONF); RFC6241.TXT, INTERNET ENGINEERING TASK FORCE, IETF; STANDARD, INTERNET SOCIETY (ISOC) 4, RUE DES FALAISES CH- 1205 GENEVA, SWITZERLAND, 30 June 2011 (2011-06-30), pages 1 - 113, XP015076061, [retrieved on 20110630]
- BRAVALHERI ANDERSON: "Overview of South-Bound Interfaces for Software-Defined Optical Networks", 2018 20TH INTERNATIONAL CONFERENCE ON TRANSPARENT OPTICAL NETWORKS (ICTON), IEEE, 1 July 2018 (2018-07-01), pages 1 - 5, XP033409245, DOI: 10.1109/ICTON.2018.8473494

## Description

### TECHNICAL FIELD

This disclosure relates to the field of communications technologies, and in particular, the invention relates to a YANG module management method, apparatus, and system.

### BACKGROUND

There are more network devices as a network scale gradually becomes large and complex. The Network Configuration Protocol (network configuration protocol, NETCONF) emerges as a programmable protocol for configuring and managing the network devices, to manage the network devices. In addition, a YANG modeling language is widely used to resolve problems and disadvantages in configuration and management practices.

YANG is a data modeling language for network configuration and management defined by the Internet Engineering Task Force (internet engineering task force, IETF) standards organization, to support complete description of data between a NETCONF client and server. A YANG module is used to describe configuration data, state data, a remote procedure call (remote procedure call, RPC), and a notification (Notification) that are exchanged between the NETCONF client and server. Therefore, how to manage the YANG module is a problem that needs to be urgently resolved in a network device management process.
WILTON CISCO SYSTEMS R ET AL, "YANG Packages; draft-rwilton-netmod-yang-packages-01.txt", no. 1, (20190310), pages 1 - 43, YANG PACKAGES; DRAFT-RWILTON-NETMOD-YANG-PACKAGES-01.TXT; INTERNET-DRAFT: NETWORK WORKING GROUP, INTERNET ENGINEERING TASK FORCE, IETF; STANDARDWORKINGDRAFT, WILTON R RAHMAN CISCO SYSTEMS R ET AL, "YANG Schema Version Selection; draft-wilton-netmod-yang-ver-selection-00.txt", (20190311), pages 1 - 16, YANG SCHEMA VERSION SELECTION; DRAFT-WILTON-NETMOD-YANG-VER-SELECTION-00.TXT; INTERNET-DRAFT: NETWORK WORKING GROUP, INTERNET ENGINEERING TASK FORCE, IETF; STANDARDWORKINGDRAFT and BIERMAN YUMAWORKS A, "The YANG Package Statement; draft-bierman-netmod-yang-package-00.txt", THE YANG PACKAGE STATEMENT; DRAFT-BIERMAN-NETMOD-YANG-PACKAGE-00.TXT, INTERNET ENGINEERING TASK FORCE, IETF; STANDARDWORKINGDRAFT are working group document of the IETF related to the presentation of the YANG Module concept and related data structures.
PNF Software upgrade, scenario 1, controller to PNF interface, Linda Horn (NOKIA), August 8, 2019, is a presentation on a proposed improvement of a scenario 1 presented by Ericsson and Huawei in the presentation entitled PNF software upgrade for Frankfurt release.
Network function virtualization (NFV) release 2; Protocol and data models; VNF Package and PNDF archive specification, ETSI GS NFV-SOL 004 v2.6.3 (2019-08) is a working document of ETSI relating to VNF and PNDF package files and their constituents.

### SUMMARY

The object of the present invention is to provide a YANG module management method, apparatus, and system, to resolve a problem in a related technology. This object is solved by the attached independent claims and further embodiments and improvements of the invention are listed in the attached dependent claims. Technical solutions are as follows.

According to a first aspect according to the invention, a YANG module management method is provided. The method includes: A first network device being a first management device determines a target YANG package in a second network device being a managed device. The target YANG package comprises at least two service-related YANG modules (modules). The first network device generates a processing instruction for the target YANG package. The processing instruction includes an identifier of the target YANG package. Then, the first network device sends the processing instruction to the second network device. The identifier of the target YANG package is used to identify the target YANG package. The identifier of the target YANG package comprises a name of the target YANG package, or the identifier of the target YANG package comprises the name and version information of the YANG package. The processing instruction comprises: an instruction used to instruct to load the target YANG package corresponding to the identifier of the target YANG package, wherein the instruction comprises a loading location used to instruct to load at the loading location the target YANG package corresponding to the identifier of the target YANG package, and wherein the instruction carries a command-line interface, CLI, script file used to convert the YANG modules in the target YANG package into a CLI script.

A YANG package can be differently processed according to extended new operation instructions, to perform refined read and write management. This can reduce errors, and improve management efficiency.

In an example embodiment not according to the invention, the processing instruction includes a first instruction. The first instruction includes the identifier of the target YANG package. The first instruction is used to instruct to read one or more YANG modules in the at least two service-related YANG modules from the target YANG package corresponding to the identifier of the target YANG package.

In an example not according to the invention, after sending the processing instruction to the second network device, the first network device further receives the one or more YANG modules in the at least two service-related YANG modules in the target YANG package and a corresponding schema or schemas.

In an example embodiment not according to the invention, the processing instruction further includes a third instruction. The third instruction includes the identifier of the target YANG package. The third instruction is used to instruct to query a YANG package that has a dependency relationship with the target YANG package.

In an example not according to the invention, after the first network device sends the processing instruction to the second network device, the method further includes: receiving a list of first YANG packages on which the target YANG package depends or a list of second YANG packages depending on the target YANG package.

For example, the first network device receives the list of first YANG packages on which the target YANG package depends. Alternatively, the first network device receives the list of second YANG packages depending on the target YANG package. Alternatively, the first network device receives the list of first YANG packages on which the target YANG package depends and the list of second YANG packages depending on the target YANG package.

In an example embodiment not according to the invention, the processing instruction further includes a fourth instruction. The fourth instruction includes the identifier of the target YANG package. The fourth instruction is used to instruct to delete the target YANG package corresponding to the identifier of the target YANG package and a second YANG package that depends on the target YANG package.

According to a second aspect according to the invention, a YANG module management method is provided. The method includes: A second network device being a managed device receives a processing instruction for a target YANG package. The target YANG package comprises at least two service-related YANG modules. The processing instruction is sent by a first network device being a network management device, and comprises an identifier of the target YANG package used to identify the target YANG package. The identifier of the target YANG package comprises a name of the target YANG package. or the identifier of the target YANG package comprises the name and version information of the target YANG package. Then, the second network device processes the target YANG package corresponding to the identifier of the target YANG package according to the processing instruction. The processing instruction comprises: an instruction used to instruct to load the target YANG package corresponding to the identifier of the target YANG package, wherein the instruction comprises a loading location used to instruct to load at the loading location the target YANG package corresponding to the identifier of the target YANG package, and wherein the instruction carries a command-line interface, CLI, script file used to convert the YANG modules in the target YANG package into a CLI script; and processing (304), by the second network device, the target YANG package corresponding to the identifier of the target YANG package according to the processing instruction.

In an example embodiment not according to the invention, the processing instruction includes a first instruction. The first instruction includes the identifier of the target YANG package. The first instruction is used to instruct to read one or more YANG modules in the at least two service-related YANG modules from the target YANG package corresponding to the identifier of the target YANG package.

In an example not according to the invention, when the second network device processes the target YANG package corresponding to the identifier of the target YANG package according to the processing instruction, the second network device reads, according to the first instruction, the one or more YANG modules corresponding to the identifier of the target YANG package and a corresponding schema or schemas. Then, the second network device sends the one or more YANG modules and the corresponding schema or schemas to the first network device.

In an example embodiment not according to the invention, the processing instruction further includes a third instruction. The third instruction includes the identifier of the target YANG package. The third instruction is used to instruct to query a YANG package that has a dependency relationship with the target YANG package.

In an example not according to the invention, the processing the target YANG package corresponding to the identifier of the target YANG package according to the processing instruction further includes: querying, according to the third instruction, a list of first YANG packages on which the target YANG package depends or a list of second YANG packages depending on the target YANG package; and sending, to the first network device, the list of first YANG packages on which the target YANG package depends or the list of second YANG packages depending on the target YANG package.

That the second network device queries, according to the third instruction, a list of first YANG packages on which the target YANG package depends or a list of second YANG packages depending on the target YANG package includes: querying one or both of the list of first YANG packages on which the target YANG package depends and the list of second YANG packages depending on the target YANG package.

In an example embodiment not according to the invention, the processing instruction further includes a fourth instruction. The fourth instruction includes the identifier of the target YANG package. The fourth instruction is used to instruct to delete the target YANG package corresponding to the identifier of the target YANG package and a third YANG package that depends on the target YANG package.

In an example not according to the invention, the processing the target YANG package corresponding to the identifier of the target YANG package according to the processing instruction further includes: deleting, according to the fourth instruction, the target YANG package corresponding to the identifier of the target YANG package and the third YANG package that depends on the target YANG package.

According to a third aspect according to the invention, a YANG module management apparatus is provided. The apparatus is used in a first network device being a network management module, and the apparatus includes:
a determining module, configured to determine a target YANG package in a second network device being a managed device, where the target YANG package comprises at least two service-related YANG modules;
a generation module, configured to generate a processing instruction for the target YANG package, where the processing instruction comprises an identifier of the target YANG package, the identifier of the target YANG package is used to identify the target YANG package, and the identifier of the target YANG package includes a name of the target YANG package, or the name and version information of the target YANG package;
a sending module, configured to send the processing instruction to the second network device,
the processing instruction comprises:
   an instruction used to instruct to load the target YANG package corresponding to the identifier of the target YANG package, wherein the instruction comprises a loading location used to instruct to load at the loading location the target YANG package corresponding to the identifier of the target YANG package, and wherein the instruction carries a command-line interface, CLI, script file used to convert the YANG modules in the target YANG package into a CLI script; and
   a sending module (1903), configured to send the processing instruction to the second network device.

According to an embodiment not according to the invention, the processing instruction includes a first instruction. The first instruction includes the identifier of the target YANG package. The first instruction is used to instruct to read one or more YANG modules in the at least two service-related YANG modules from the target YANG package corresponding to the identifier of the target YANG package.

In an example not according to the invention, the apparatus further includes a receiving module, configured to receive the one or more YANG modules and a schema or schemas corresponding to the one or more YANG modules.

In an example embodiment not claimed, the processing instruction further includes a third instruction. The third instruction includes the identifier of the target YANG package. The third instruction is used to instruct to query a YANG package that has a dependency relationship with the target YANG package.

In an example not according to the invention, the apparatus further includes the receiving module, configured to receive a list of first YANG packages on which the target YANG package depends or a list of second YANG packages depending on the target YANG package.

In an example embodiment not according to the invention, the processing instruction further includes a fourth instruction. The fourth instruction includes the identifier of the target YANG package. The fourth instruction is used to instruct to delete the target YANG package corresponding to the identifier of the target YANG package and a third YANG package that depends on the target YANG package.

According to a fourth aspect according to the invention, a YANG module management apparatus is provided. The apparatus is used in a second network device being a managed device, and the apparatus includes:
a receiving module, configured to receive a processing instruction for a target YANG package, where the target YANG package includes at least two service-related YANG modules, the processing instruction is sent by a first network device being a network management device, and comprises an identifier of the target YANG package, the identifier of the target YANG package is used to identify the target YANG package, and the identifier of the target YANG package includes a name of the target YANG package, or the name and version information of the target YANG package, an instruction used to instruct to load the target YANG package corresponding to the identifier of the target YANG package, wherein the instruction comprises a loading location used to instruct to load at the loading location the target YANG package corresponding to the identifier of the target YANG package, and wherein the instruction carries a command-line interface, CLI, script file used to convert the YANG modules in the target YANG package into a CLI scrip; and
a processing module, configured to process the target YANG package corresponding to the identifier of the target YANG package according to the processing instruction.

The processing module is further configured to load the target YANG package corresponding to the identifier of the target YANG package according to the second instruction.

The processing module is configured to load, at the loading location, the target YANG package corresponding to the identifier of the target YANG package according to the second instruction.

In an example embodiment not according to the invention, the processing instruction further includes a third instruction. The third instruction includes the identifier of the target YANG package. The third instruction is used to instruct to query a YANG package that has a dependency relationship with the target YANG package.

In an example not according to the invention, the processing module is further configured to query, according to the third instruction, a list of first YANG packages on which the target YANG package depends or a list of second YANG packages depending on the target YANG package.

In an example not according to the invention, the apparatus further includes the sending module, configured to send, to the first network device, the list of first YANG packages on which the target YANG package depends or the list of second YANG packages depending on the target YANG package.

In an example embodiment not according to the invention, the processing instruction further includes a fourth instruction. The fourth instruction includes the identifier of the target YANG package. The fourth instruction is used to instruct to delete the target YANG package corresponding to the identifier of the target YANG package and a third YANG package that depends on the target YANG package.

In an example not according to the invention, the processing module is further configured to delete, according to the fourth instruction, the target YANG package corresponding to the identifier of the target YANG package and the third YANG package that depends on the target YANG package.

According to a fifth aspect according to the invention, a first network device is further provided. The first network device is configured to perform the method according to the first aspect.

According to a sixth aspect according to the invention, a second network device is further provided. The second network device is configured to perform the method according to the second aspect.

According to a seventh aspect not according to the invention, a network device is further provided. The device includes a memory and a processor. The memory stores at least one instruction, and the processor loads and executes the at least one instruction to implement the method according to any one of the first aspect or the second aspect.

According to an eighth aspect not according to the invention, a computer-readable storage medium is further provided. The storage medium stores at least one instruction, and a processor loads and executes the instruction to implement the method according to any one of the first aspect or the second aspect.

According to a ninth aspect according to the invention, a YANG module management system is further provided. The system includes a first network device and a second network device. The first network device is configured to perform the method according to the first aspect. The second network device is configured to perform the method according to the second aspect.

Another communications apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive and send a signal. In addition, when the processor executes the instructions stored in the memory, the processor is enabled to perform the method in any one of the foregoing possible implementations.

In an example embodiment, there are one or more processors, and there are one or more memories.

In an example embodiment, the memory may be integrated with the processor, or the memory and the processor are disposed separately.

In a specific implementation process, the memory may be a non-transitory (non-transitory) memory, for example, a read-only memory (read only memory, ROM). The memory and the processor may be integrated into one chip, or may be disposed in different chips. A type of the memory and a manner of disposing the memory and the processor are not limited in this embodiment of this application.

A computer program (product) is provided but not claimed. The computer program (product) includes computer program code. When the computer program code is run on a computer, the computer is enabled to perform the method according to the foregoing aspects.

A chip not claimed is provided. The chip includes a processor, configured to invoke, from a memory, instructions stored in the memory and run the instructions, so that a communications device on which the chip is installed performs the method according to the foregoing aspects.

Another chip not claimed is provided, including an input interface, an output interface, a processor, and a memory. The input interface, the output interface, the processor, and the memory are connected to each other through an internal connection path. The processor is configured to execute code in the memory. When the code is executed, the processor is configured to perform the method according to the foregoing aspects.

### BRIEF DESCRIPTION OF DRAWINGS

FIG. 1 is a schematic diagram of a structure of a YANG module management system according to an embodiment of this application;
FIG. 2 is a schematic diagram of a YANG package in a network device according to an embodiment of this application;
FIG. 3 is a flowchart of a YANG module management method according to an embodiment of this application;
FIG. 4(1) and FIG. 4(2) are schematic diagrams of structures of a processing instruction according to an embodiment of this application;
FIG. 5 is a schematic diagram of a structure of a processing instruction according to an embodiment of this application;
FIG. 6 is a schematic diagram of a structure of a processing instruction according to an embodiment of this application;
FIG. 7 is a schematic diagram of a structure of a processing instruction according to an embodiment of this application;
FIG. 8 is a schematic diagram of a structure of a processing instruction according to an embodiment of this application;
FIG. 9 is a schematic diagram of interaction in a YANG module management process according to an embodiment of this application;
FIG. 10 is a schematic diagram of a structure of a YANG package according to an embodiment of this application;
FIG. 11 is a schematic diagram of a structure of a YANG module management system according to an embodiment of this application;
FIG. 12 is a schematic diagram of a structure of a YANG module management system according to an embodiment of this application;
FIG. 13 is a schematic diagram of a structure of a processing instruction according to an embodiment of this application;
FIG. 14 is a schematic diagram of a structure of a processing instruction according to an embodiment of this application;
FIG. 15 is a schematic diagram of a structure of a processing instruction according to an embodiment of this application;
FIG. 16 is a schematic diagram of a structure of a YANG package according to an embodiment of this application;
FIG. 17 is a schematic diagram of a YANG module management interaction process according to an embodiment of this application;
FIG. 18 is a schematic diagram of a YANG module management interaction process according to an embodiment of this application;
FIG. 19 is a schematic diagram of a structure of a YANG module management apparatus according to an embodiment of this application;
FIG. 20 is a schematic diagram of a structure of a YANG module management apparatus according to an embodiment of this application;
FIG. 21 is a schematic diagram of a structure of a YANG module management apparatus according to an embodiment of this application;
FIG. 22 is a schematic diagram of a structure of a YANG module management apparatus according to an embodiment of this application; and
FIG. 23 is a schematic diagram of a structure of a network device according to an embodiment of this application.
In the following description, features which in the above summary of the invention have been marked as "not claimed" are also hereinafter, when they are described and explained with reference to the drawings, to be understood as "not claimed" or "not part of the invention".

### DESCRIPTION OF EMBODIMENTS

Terms used in implementations of this application are merely used to explain specific embodiments of this application, but are not intended to limit this application.

There are more network devices as a network scale gradually becomes large and complex. NETCONF emerges to manage the network devices. NETCONF is a network management protocol based on an extensible markup language (extensible markup language, XML), and provides a programmable method for configuring and managing the network devices. The NETCONF protocol is used to set a parameter, obtain a parameter value, obtain statistical Information, and the like.

NETCONF packets are in XML format and have a filtering capability. Each data item has a fixed element name and location. In this way, different devices of one vendor have a same access mode and result display mode. Devices of different vendors can achieve the same effect through XML mapping. With help of such network management software, a NETCONF function makes it easy and efficient to configure and manage the network devices.

In addition to the NETCONF, Representational State Transfer Configuration Protocol (representational state transfer configuration, RESTCONF) is an HTTP-based RESTful protocol and can be used to access data defined in YANG and use a datastore defined in the NETCONF. For a definition and description of the YANG, refer to related descriptions in request for comments (Requirement For Comments, RFC) 6020 and RFC 7950. RESTCONF implements a simplified NETCONF protocol in a RESTful style. For example, PUT/POST/DELETE/GET based on the Hypertext Transfer Protocol (hypertext transfer protocol, HTTP) is used to edit and query data defined by a YANG module. The POST operation is also used to perform an RPC method defined by the YANG module.

That is, the YANG module can be managed by using both NETCONF and RESTCONF. For example, RFC 6022 specifies that, in NETCONF, a <get-schema> operation is used to read a schema of a single module (module), or a <get> operation is used to read /netconf-state/schemas to obtain a list of all schemas. For another example, RFC 8040 specifies that, in RESTCONF, a schema URL of a module is read from a YANG library, and then a GET method is used to read a single module schema resource based on a uniform resource location (uniform resource location, URL).

Regardless of whether the YANG module is managed by using NETCONF or RESTCONF, the network device may be managed by a plurality of network management devices. Therefore, how to manage the YANG module in a network device is a key to improving network device management efficiency.

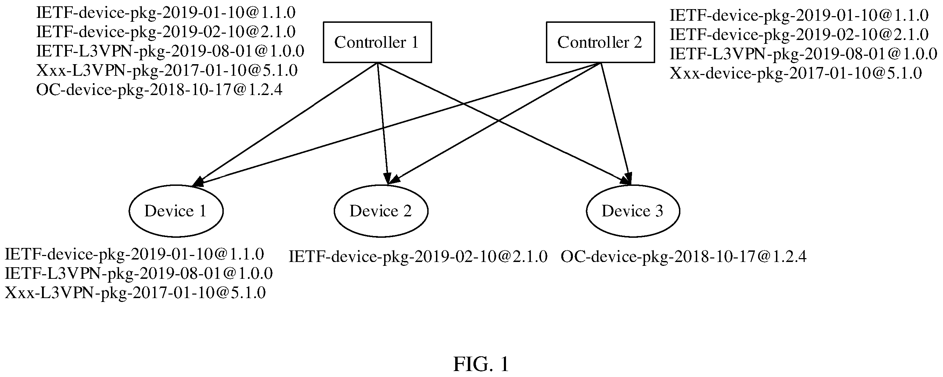

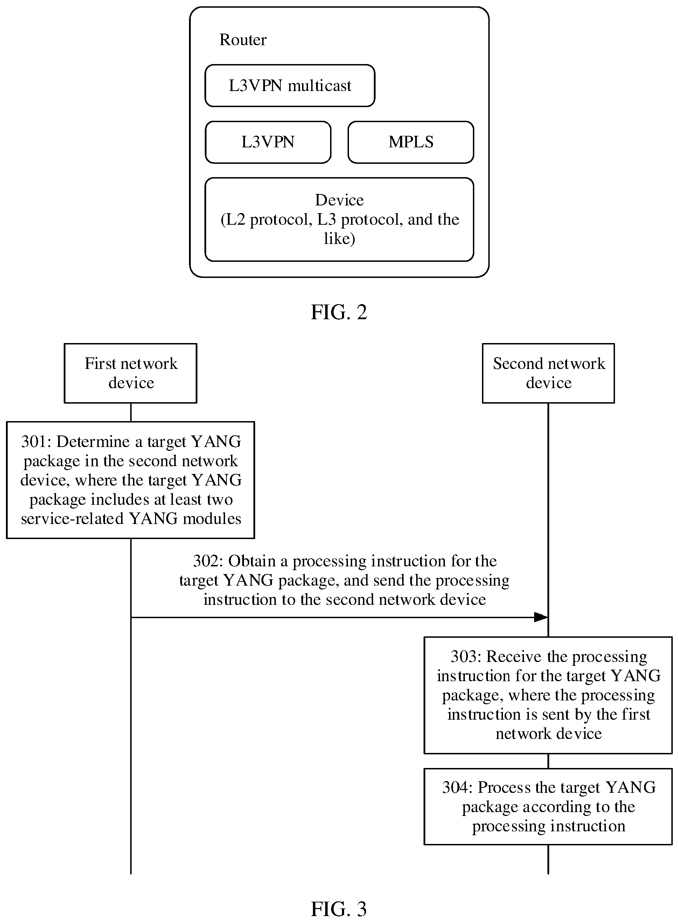

For example, a network system shown in FIG. 1 is used as an example. A network device is managed by a plurality of network management devices, such as a network management device responsible for deployment and installation, a network management device responsible for service configuration, and a network management device responsible for troubleshooting. The network management devices may be NETCONF/RESTCONF controllers or NETCONF/RESTCONF clients. The managed network device may be a related device in a network, for example, a device such as a router, a switch, a gateway, or a firewall; or may be a server or a server-side device. For example, a device 1, a device 2, and a device 3 are separately managed by a controller 1 and a controller 2 in FIG. 1. The controller 1 is a network management device responsible for deployment and installation. The controller 2 is a network management device responsible for service configuration and troubleshooting. The device 1, the device 2, and the device 3 are separately managed by the controller 1 and the controller 2. The device 1 includes a plurality of YANG packages corresponding to software packages, such as IETF-device-pkg-2019-01-10@1.1.0, IETF-L3VPN-pkg-2019-08-01@1.0.0, and Xxx-L3VPN-pkg-2017-01-10@5.1.0. The software packages in FIG. 1 are merely examples for description, and the device may further include another software package. For example, software packages in the device may also be shown in FIG. 2.

A NETCONF/RESTCONF controller or NETCONF/RESTCONF client is configured to remotely manage the network device, including software installation and upgrade in the device, and dynamic loading and unloading of modules packages and modules corresponding to functions supported by the software packages. A NETCONF/RESTCONF device (device) or NETCONF/RESTCONF server (server) performs a protocol operation invoked by the client. The server may return an operation result to the client.

However, when the network device performs life cycle management on a YANG package (package), an operation defined by NETCONF or RESTCONF is to process all modules or a single module in a specified datastore (datastore), but not to process a package datastore. In addition, the network management controller can invoke only a get-schema operation to read a YANG module schema (schema) supported by the device, then determines a service dependency relationship manually or by using a machine in sequence, and performs operations such as classification and assembly. This is inefficient and error-prone.

In view of this, an embodiment of this application provides a YANG module management method. In the method, a network management device is a first network device and a managed device is a second network device. In this case, a module set supported by the device is managed at a granularity of packages, the network device is allowed to perform a fine-granularity operation on a module set of a related package, and different network management systems are supported to update or delete the module set supported by the device. As shown in FIG. 3, the method includes the following processes.

301: The first network device determines a target YANG package in the second network device, where the target YANG package includes at least two service-related YANG modules.

In this embodiment of this application, a plurality of YANG modules have been installed in the second network device. For ease of management, package division may be performed on the YANG modules based on a service dimension, to group YANG modules in a same service dimension into one YANG package. In other words, one YANG package includes at least two service-related YANG modules. A YANG package division manner is not limited in this embodiment of this application. For example, a service-related YANG module in the second network device may be subdivided into a plurality of smaller function packages. For example, after YANG packages in the second network device are divided, a basic package includes a module set of basic functions on which a service depends. The basic package is a YANG package on which another package depends, and a feature package is a YANG package that depends on the basic package.

Regardless of the manner in which the YANG packages in the second network device are divided, the first network device may read YANG module information and YANG package information from the second network device.

302: The first network device obtains a processing instruction for the target YANG package, and sends the processing instruction to the second network device.

Because the second network device includes a plurality of YANG packages, and the first network device can manage any YANG package, the processing instruction includes an identifier of the target YANG package to specify a to-be-processed YANG package. For example, the identifier of the target YANG package includes a name of the target YANG package, or the name and version information of the target YANG package. In addition, there may be a plurality of processing modes in this embodiment of this application. In this case, after determining the target YANG package, the first network device obtains the processing instruction for the target YANG package. The processing instruction includes but is not limited to instructions of the following one or more types.

First instruction of a type 1 (not according to the instruction, as illustration): The first instruction includes the identifier of the target YANG package. The first instruction is used to instruct to read one or more YANG modules in the at least two service-related YANG modules from the target YANG package corresponding to the identifier of the target YANG package.

According to the first instruction of the type 1, the first network device may read the target YANG package in the second network device to perform query. For example, the first instruction may be implemented by using get-package-schema, so that the first network device reads YANG packages deployed in the second network device and schema information in a package in a package dimension.

For example, the first network device sends a first RPC including get-package-schema to the second network device. get-package-schema carries the identifier of the target YANG package.

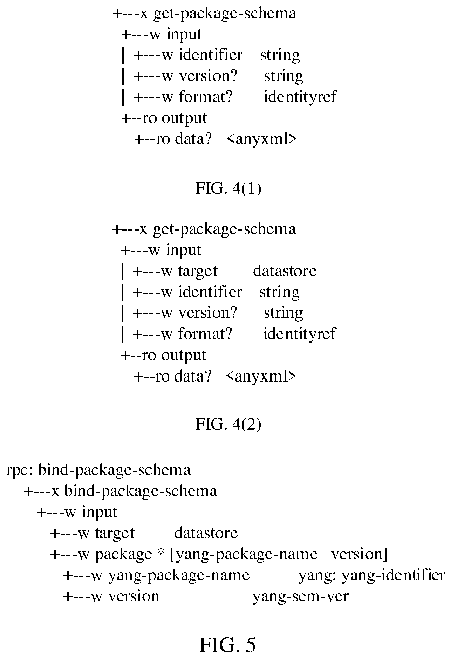

The identifier of the target YANG package may be the name (name) of the target YANG package, and may further include the version information. The version information may include a digit that functions as an identifier. YANG packages of different versions have different version information. For example, the first RPC may be shown in FIG. 4(1) or FIG. 4(2).

Second instruction of a type 2: The second instruction includes the identifier of the target YANG package. The second instruction is used to instruct to load the target YANG package corresponding to the identifier of the target YANG package.

The first network device may load the target YANG package into the second network device according to the second instruction of the type 2. For example, the second instruction may be implemented by using bind-package-schema-to-datastore, so that the first network device loads the target YANG package into a datastore of the second network device in the package dimension.

In an example embodiment, the second instruction further includes a loading location. The second instruction is used to instruct to load, at the loading location, the target YANG package corresponding to the identifier of the target YANG package.

For example, the first network device sends a second RPC including bind-package-schema-to-datastore to the second network device. bind-package-schema-to-datastore carries information such as the loading location (for example, datastore information), an identifier of a to-be-loaded package (for example, a package name), and a version of the to-be-loaded package. For example, the second RPC may be shown in FIG. 5.

In an example embodiment, the second instruction further carries a command-line interface (command-line interface, CLI) script file. The CLI script file is used to convert the YANG module in the target YANG package into a CLI script. Based on this, a device that supports a NETCONF YANG interface may convert the YANG module in the target YANG package into the CLI script.

Third instruction of a type 3 (not according to the invention, as an illustration): The third instruction includes the identifier of the target YANG package. The third instruction is used to instruct to query a YANG package that has a dependency relationship with the target YANG package corresponding to the identifier of the target YANG package.

According to the third instruction of the type 3, the first network device may query the YANG package in the second network device that has the dependency relationship with the target YANG package. The YANG package that has the dependency relationship with the target YANG package include a first YANG package on which the target YANG module data package depends, and a second YANG package that depends on the target YANG package. For example, the third instruction may be implemented by using get-package-dependency, so that the first network device queries a package in the datastore of the second network device, all second YANG packages that depend on the package, and a first YANG package on which the target YANG module data package depends.

It should be noted that there may be one or more first YANG packages and one or more second YANG packages. This is not limited in this embodiment of this application.

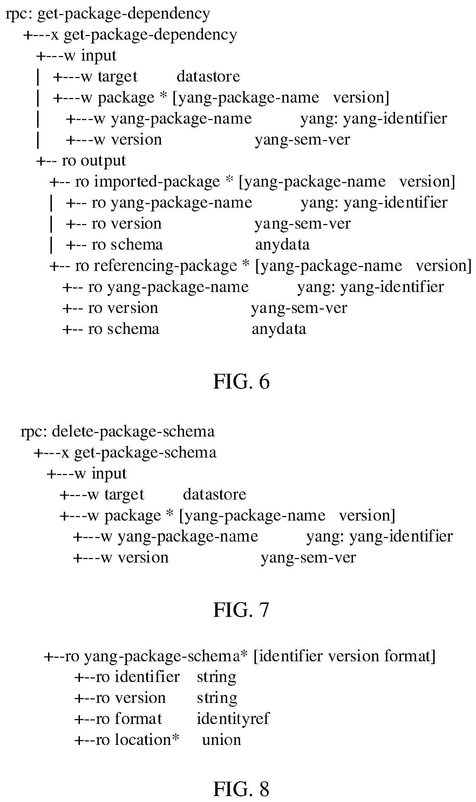

For example, the first network device sends a third RPC including get-package-dependency to the second network device. get-package-dependency carries information such as a reading location (for example, the datastore information), the package identifier (for example, the package name), and the package version. For example, the third RPC may be shown in FIG. 6.

Fourth instruction of a type 4 (not according to the invention, as illustration): The fourth instruction includes the identifier of the target YANG package. The fourth instruction is used to instruct to delete the target YANG package corresponding to the identifier of the target YANG package and a third YANG package that depends on the target YANG package.

According to the fourth instruction of the type 4, the first network device may control the second network device to delete the target YANG package in the second network device. For example, the fourth instruction may be implemented by using delete-package-schema, so that the first network device control the second network device to delete the target YANG package in the second network device and the third YANG package that depends on the target YANG package.

For example, the first network device sends a fourth RPC including delete-package-schema to the second network device. delete-package-schema carries the information such as a reading location (for example, the datastore information), the package identifier (for example, the package name), and the package version. For example, the fourth RPC may be shown in FIG. 7.

303: The second network device receives the processing instruction for the target YANG package, where the processing instruction is sent by the first network device.

The second network device may receive, through a network, the processing instruction for the target YANG package, where the processing instruction is sent by the first network device. For example, the first network device may send processing instructions of one or more of the foregoing type 1 to type 4. In this case, the second network device receives the processing instruction.

304: The second network device processes the target YANG package according to the processing instruction.

Because the processing instruction includes but is not limited to instructions of one or more of the foregoing type 1 to type 4, processing modes in which the second network device processes the target YANG package according to the processing instruction include but are not limited to one or more of the following processing modes.

Processing mode 1 (not according to the invention, as illustration): In a manner in which the processing instruction includes the first instruction of the type 1, the processing the target YANG package according to the processing instruction includes: reading, according to the first instruction, one or more YANG modules in the at least two service-related YANG modules in the target YANG package and a corresponding schema or schemas; and sending, to the first network device, the one or more YANG modules in the at least two service-related YANG modules in the target YANG package and the corresponding schema or schemas.

In the processing mode 1, for example, the second network device sends overall schema information included in the target package to the first network device according to an instruction shown in FIG. 4(1). Alternatively, for example, the second network device sends module schema list information included in the target package to the first network device according to an instruction shown in FIG. 4(2).

Correspondingly, after the first network device sends the processing instruction to the second network device, the method further includes: receiving the one or more YANG modules in the at least two service-related YANG modules in the target YANG package and the corresponding schema or schemas.

Processing mode 2 (according to the invention): In a manner in which the processing instruction includes the second instruction of the type 2, the processing the target YANG package according to the processing instruction includes: loading the target YANG package corresponding to the identifier of the target YANG package according to the second instruction.

In the invention, the second instruction further includes the loading location. The second instruction carries the loading location of the target YANG package and the identifier of the target YANG package, so that the second network device loads, at the loading location, the target YANG package corresponding to the identifier of the target YANG package according to the second instruction.

In the invention, the second instruction further carries the CLI script file. Correspondingly, that the second network device processes the target YANG package according to the processing instruction further includes: converting the YANG module in the target YANG package into the CLI script according to the script file.

Processing mode 3 (not according to the invention, as illustration): In a manner in which the processing instruction includes the third instruction of the type 3, the processing the target YANG package according to the processing instruction includes: querying, according to the third instruction, a list of first YANG packages on which the target YANG package depends and/or a list of second YANG packages depending on the target YANG package; and sending, to the first network device, the list of first YANG packages on which the target YANG package depends and/or the list of second YANG packages depending on the target YANG package.

For example, a list of all packages on which the target YANG package depends and that are sent by the second network device to the first network device, that is, the list of first YANG packages, includes the following information:
package identifiers (for example, package names) of the first YANG packages, package versions, schema information included in the packages, and the like.

The list of second YANG packages depending on the target YANG package includes the following information:
package identifiers (for example, package names) of the second YANG packages, package versions, schema information included in the packages, and the like.

Correspondingly, after the first network device sends the processing instruction to the second network device, the method further includes: receiving the list of first YANG packages on which the target YANG package depends and/or the list of second YANG packages depending on the target YANG package.

Processing mode 4 (not according to the invention, as illustration): In a manner in which the processing instruction includes the fourth instruction of the type 4, the processing the target YANG package according to the processing instruction includes: deleting, according to the fourth instruction, the target YANG package corresponding to the identifier of the target YANG package and the second YANG package that depends on the target YANG package.

In addition, the fourth instruction may further carry read location information of the target YANG package, that is, the fourth instruction carries the read location information of the target YANG package and the identifier of the target YANG package. Based on this, the second network device may delete the target YANG package. In addition, because the second network device can obtain a dependency relationship of the target YANG module, after deleting the target YANG package, the second network device may further delete the second YANG package that depends on the target YNAG module data package.

It should be noted that, in addition to the foregoing processing instruction of the several types and the corresponding processing modes, there may be another processing mode for the YANG package. A specific processing mode is not limited in this embodiment of this application. For example, in addition to the case in which the target YANG package is loaded shown in FIG. 5, a NETCONF monitoring module may be extended. As shown in FIG. 8, the target YANG package may be loaded for the NETCONF monitoring module, to extend the NETCONF monitoring module.

In addition, the loading the target YANG package may be loading a YANG package that is not installed on the second network device, or an existing YANG package in the second network device.

In conclusion, in the method provided in this embodiment of this application, extended new operation instructions allow to read a package schema, read a dependency relationship between packages, load the package schema into a datastore, and delete a package schema from the datastore. In addition, a NETCONF status module schema may be further extended. According to the method provided in this application, a YANG package can be differently processed to perform refined read and write management. This can reduce errors, and improve management efficiency.

An application process of the foregoing processing instruction of the several types is used as an example below to describe the YANG module management method.

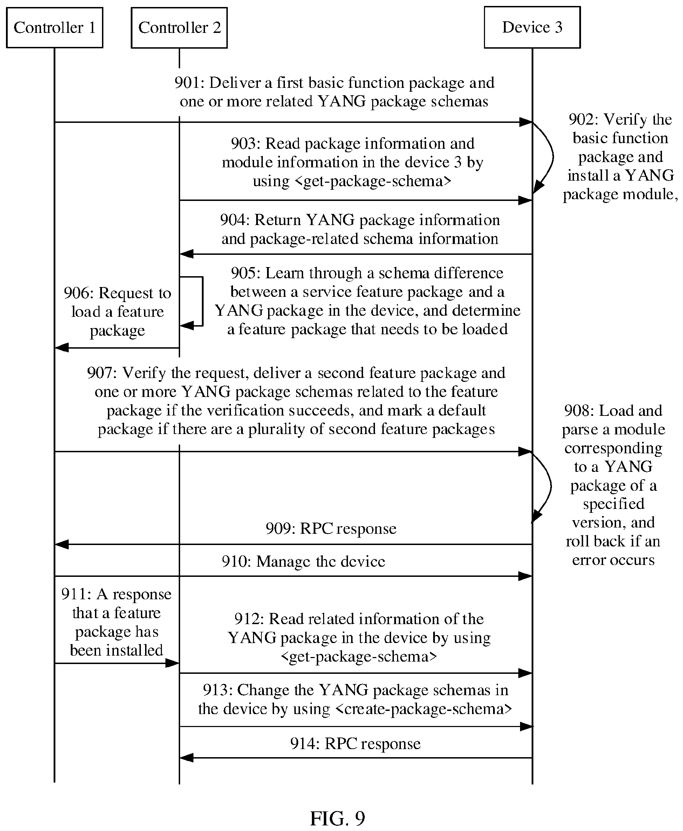

First, the YANG module management method is described by using an example. In the example, a first network device is a controller system including a controller 1 and a controller 2, a second network device is a device 3, software packages included in the device 3 include a basic function package and an L3VPN function package, and the controller queries information about an existing YANG package in the device 3, and loads, into the device 3, a target YANG package that needs to be newly written. As shown in FIG. 9, the method includes the following processes.

901: The controller 1 delivers a first basic function package and one or more related YANG package schemas to the device 3.

For example, the basic function package may be IETF-device-pkg, xxx-device-pkg, and openconfig-device-pkg. The controller 1 may select specified ietf YANG when installing software. Alternatively, if no YANG package is specified, the device 3 may select a YANG package by default when installing software. The YANG package selected by default may be a vendor-specific YANG package.

902: The device 3 verifies the basic function package and the YANG package schemas. A default or specified YANG package schema is selected if there are a plurality of the package schemas. The device 3 writes the corresponding YANG package schema into a datastore of the device, and updates a status of the YANG package.

903: The controller 2 reads package information and module information in the device 3.

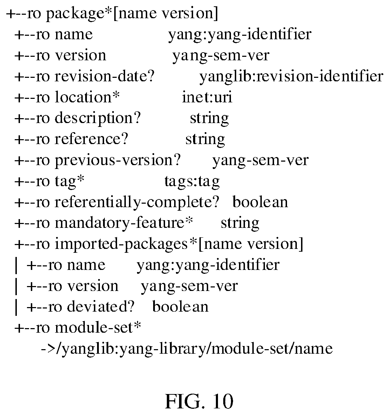

For example, the controller 2 reads the schema corresponding to the YANG package by using get-package-schema. For example, a YANG package shown in FIG. 10 includes the name of xxx-device-pkg, version 3.1.2, and revision-date 2017-3-2.

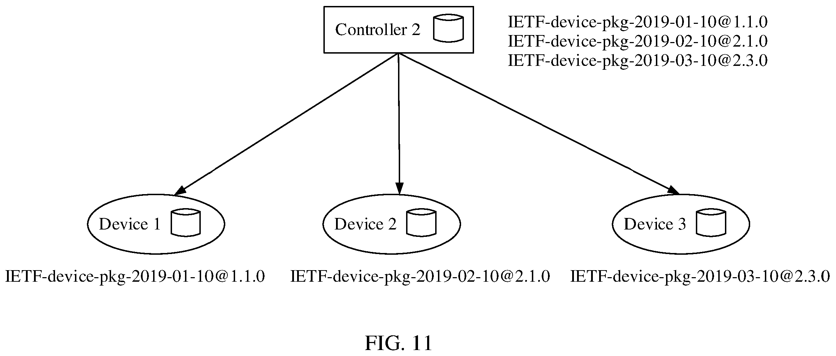

As shown in FIG. 11, the controller 2 manages three devices: a device 1 to the device 3. The controller 2 may read the schema corresponding to the YANG package in the device 3.

904: The device 3 returns the YANG package information and package-related schema information to the controller 2.

905: The controller 2 learns through a schema difference between a service feature package and the YANG package in the device 3, and determines a feature package that needs to be loaded.

For example, after learning through the schema difference between the service feature package and the YANG package in the device 3, the controller 2 determines that the feature package that needs to be loaded is L3VPN. In other words, the controller 2 determines that the device 3 needs to update the feature package.

906: The controller 2 requests the controller 1 to load the feature package, for example, requests to load the L3VPN feature package for installation.

907: The controller 1 verifies whether the request complies with a service policy, delivers a second feature package and one or more YANG package schemas related to the feature package if the verification succeeds, and marks a default package if there are a plurality of second feature packages.

For example, the second feature package delivered by the controller 1 to the device 3 is an L3VPN YANG package, for example, the L3VPN function package and the YANG package schemas are delivered. There may be one or more YANG packages, for example, IETF-L3VPN-pkg, or xxx-L3VPN-pkg.

908: The device 3 loads and parses a module corresponding to a YANG package of a specified version, and rolls back if an error occurs.

For example, the device 3 loads and verifies the L3VPN function package and the L3VPN YANG package, and selects a default IETF-L3VPN-pkg. The device 3 further updates a status of the YANG package if the verification succeeds. The device 3 rolls back, for example, loads and parses the module again if an error occurs.

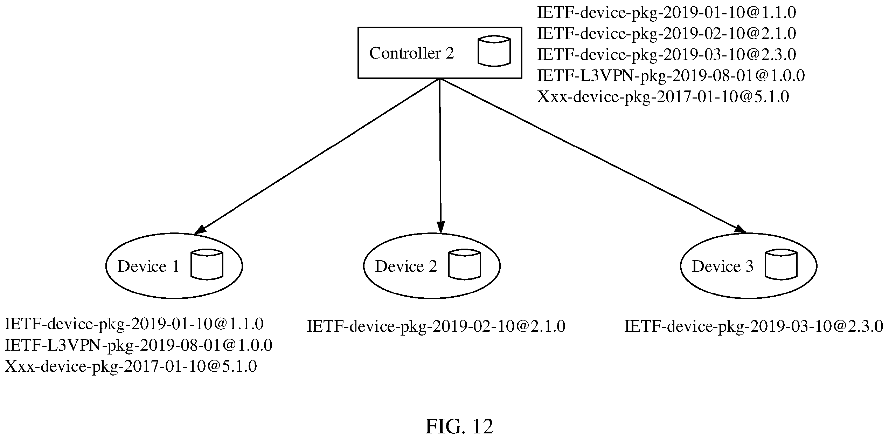

One device can usually install one software package. The software package includes software with different functions, and the functions correspond to YANG packages. In this way, two YANG packages are added to the device 1 after step 908, as shown in FIG. 12.

909: The device 3 returns an RPC response to the controller 1.

910: The controller 1 updates management of the device 3.

911: The controller 1 notifies the controller 2 of a response that a feature package has been installed.

912: The controller 2 reads related information of the YANG package in the device 3.

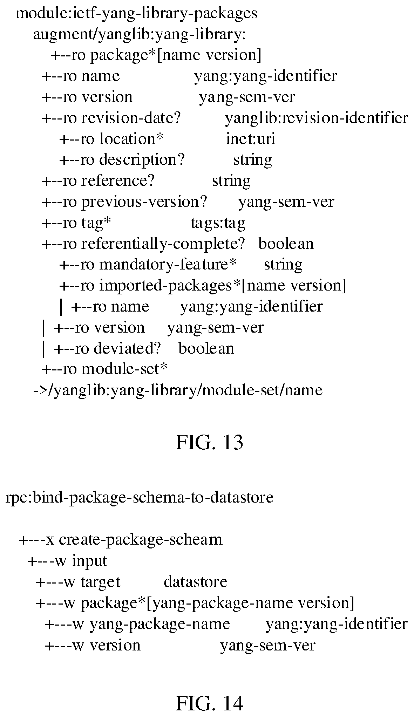

For example, the controller 2 reads a schema corresponding to the YANG package by using a processing instruction get-package-schema, and saves the schema. The processing instruction is shown in FIG. 13.

913: The controller 2 analyzes a service feature, and determines that current IETF-L3VPN-pkg needs to be switched to xxx-L3VPN-pkg for a module of a datastore of the current device. The controller 2 delivers an RPC to the device 3, so as to update the module of the datastore.

For example, the controller 2 changes the YANG package schemas in the device 3 by using <create-package-schema>.

914: The device 3 returns an RPC reply OK.

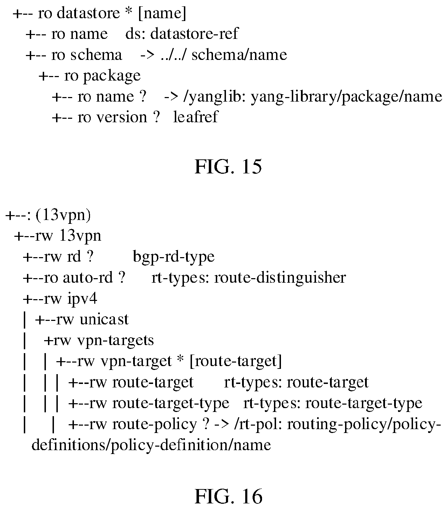

In this way, the controller 2 may query updated statuses of the datastore and the packages. For example, the updated status of the datastore may be shown in FIG. 14, and the updated statuses of the packages may be shown in FIG. 15.

In addition, the controller 2 may further deliver L3VPN feature configurations by using xxx-L3VPN-pkg as shown in FIG. 16.

In the method provided in this embodiment of this application, extended new operation instructions allow to read a package schema, and load the package schema into a datastore. In this way, a YANG package can be differently processed to perform refined read and write management. This can reduce errors, and improve management efficiency.

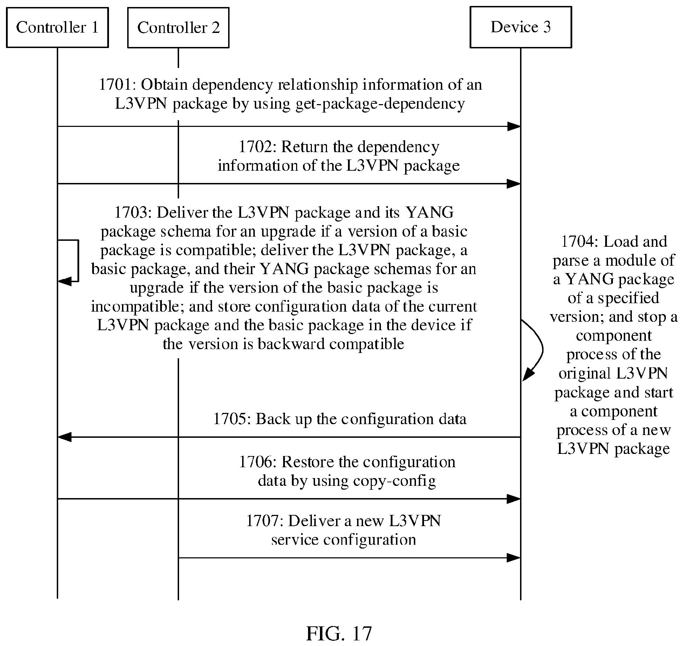

The YANG module management method is described still by using an example. In the example, a first network device is a controller system including a controller 1 and a controller 2, a second network device is a device 3, software packages included in the device 3 include a basic function package and a feature package, to be specific, an L3VPN package, and the controller queries information about an existing YNAG module data package in the device 3, queries a target YANG package, and updates the target YNAG module data package. As shown in FIG. 17, the method includes the following processes.

1701: The controller 1 reads dependency relationship information of the L3VPN package in a current datastore of the device 3 by using a get-package-dependency operation.

1702: The device 3 returns a dependency relationship of the YANG package.

For example, the device 3 is a router in FIG. 2. The device includes an L3VPN multicast package, the L3VPN package, an MPLS package, and a device package. The device package may be a YANG package in a protocol such as an L2 protocol or an L3 protocol. The L3VPN multicast package depends on the L3VPN package and the device package, and the L3VPN package depends on the device package. In this case, the L3VPN package depends on the device package, and the L3VPN multicast package depends on the L3VPN package. In addition, a dependency relationship between versions is further included.

1703: The controller 1 determines an upgrade policy based on version information and the dependency relationship of the current L3VPN package, and returns the dependency information of the L3VPN package to the device 3.

For example, the upgrade policy includes: if a version of a new L3VPN package can be compatible with a version of the current device package, and whether a version of the L3VPN multicast package can be compatible with the version of the new L3VPN package. If the versions are compatible, the controller 1 delivers the L3VPN package and its YANG package schema for an upgrade. If the version of the new L3VPN package is incompatible with the version of the current device package, or the version of the L3VPN multicast package is incompatible with the version of the new L3VPN package, the controller 1 needs to deliver the L3VPN package and the device package, or the L3VPN multicast package and its YANG package schema for an upgrade.

In addition, the controller 1 further needs to save configuration data of the current L3VPN package, the device package, or another service. This helps restore data after a YANG package upgrade or an upgrade of a process corresponding to software.

1704: The device 3 loads and parses the L3VPN YANG package, and stops a component process of the original L3VPN package and starts a component process of a new L3VPN package. In addition, if another dependent package or a depended package is also downloaded, the device 3 needs to restart a process corresponding to a related package. The another dependent package is another YANG package that depends on the L3VPN YANG package, and the depended package is a YANG package on which the L3VPN YANG package depends.

After the target YANG package is queried, the method provided in this embodiment of this application further supports update and upgrade management of the YANG package. For example, refer to the following steps.

1705: The device 3 backs up the configuration data to the controller 1.

1706: The controller 1 sends the configuration data to the device 3 by using copy-config, so that the device 3 restores the configuration data.

For example, the device 3 restores the configuration data of the L3VPN package if the new L3VPN package is successfully loaded. Configuration data related to another package needs to be restored if the another package is associated.

1707: The controller 2 reads a YANG package schema of the new L3VPN package, and delivers a new L3VPN service configuration.

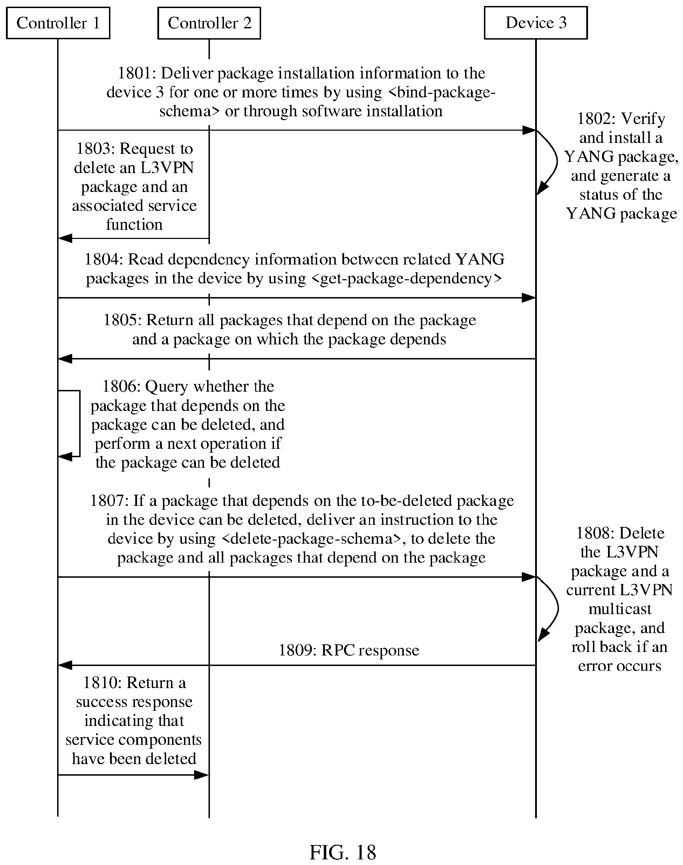

The YANG module management method is described still by using an example. In the example, a first network device is a controller system including a controller 1 and a controller 2, a second network device is a device 3, software packages included in the device 3 include a basic function package and a feature package, to be specific, an L3VPN package, and the controller loads a YNAG module data package into the device 3, and deletes a target YANG package. As shown in FIG. 18, the method includes the following processes.

1801: The controller 1 delivers package installation information to the device 3 for one or more times by using bind-package-schema or through software installation.

For example, the controller 1 installs a plurality of YANG package schemas on the device 3 for a plurality of times, such as L3VPN packages of a plurality of versions and device packages of a plurality of versions, or the L3VPN packages of a plurality of versions.

1802: The device 3 verifies and installs a YANG package, and generates a status of the YANG package.

1803: The controller 2 requests the controller 1 to delete the L3VPN package and an associated service function.

Because of a management update, for example, the device 3 no longer supports an L3VPN service, the controller 2 requests the controller 1 to delete the L3VPN package and related service components thereof. This triggers a deletion operation provided in this embodiment.

1804: The controller 1 reads dependency information between related YANG packages in the device 3 by using a get-package-dependency operation.

For example, the controller 1 reads a dependency relationship of the L3VPN package in a current datastore of the device 3 by using the get-package-dependency operation.

1805: The device 3 returns the dependency relationship of the YANG package, where the dependency relationship includes all packages that depend on the package and a package on which the package depends.

For example, an L3VPN multicast package depends on the L3VPN package and a device package, and the L3VPN package depends on the device package. In other words, the L3VPN package depends on the device package, and the L3VPN multicast package depends on the L3VPN package. In this case, the device 3 returns information about the L3VPN package and the device package.

1806: The controller 1 queries whether the package that depends on the package can be deleted, and performs a next operation of step 1807 if the package can be deleted.

For example, the controller 1 determines a deletion policy based on version information and the dependency relationship of the current L3VPN package. The deletion policy includes deleting L3VPN packages of all versions and L3VPN multicast packages that depend on the L3VPN packages.

1807: If a package that depends on the to-be-deleted package in the device 3 can be deleted, the controller 1 delivers an instruction to the device by using <delete-package-schema>, to delete the package and all packages that depend on the package.

1808: The device 3 deletes the L3VPN package and the current L3VPN multicast package, and rolls back if an error occurs. For example, the device 3 performs the deletion again.

For example, the device 3 deletes all configuration data corresponding to the L3VPN package. The device 3 stops processes corresponding to the L3VPN package and the L3VPN multicast package.

1809: The device 3 returns an RPC response, that is, an operation result, to the controller 1.

For example, an error is reported if the package is not found. A success response is returned if the deletion is successful.

1810: The controller 1 returns, to the controller 2, a success response indicating that service components have been deleted.

In the method provided in this embodiment of this application, extended new operation instructions allow to read a dependency relationship of a package, load a package schema into a datastore, and delete the package schema from the datastore. In this way, a YANG package can be differently processed to perform refined read and write management. This can reduce errors, and improve management efficiency.

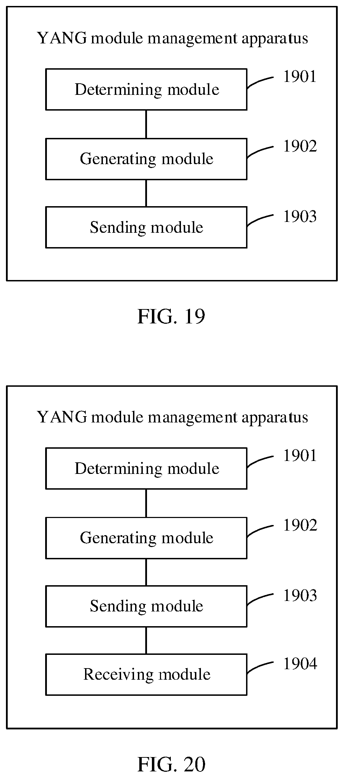

An embodiment of this application provides a YANG module management apparatus. The apparatus is used in a first network device, and is configured to perform functions performed by the first network device in FIG. 3. As shown in FIG. 19, the apparatus includes:
a determining module 1901, configured to perform step 301 in FIG. 3, that is, configured to determine a target YANG package in a second network device, where the target YANG package includes at least two service-related YANG modules;
a generation module 1902, configured to generate a processing instruction for the target YANG package, where the processing instruction includes an identifier of the target YANG package, the identifier of the target YANG package is used to identify the target YANG package, and the identifier of the target YANG package includes a name of the target YANG package, or the name and version information of the target YANG package; and
a sending module 1903, configured to send the processing instruction to the second network device.

The generation module 1902 and the sending module 1903 are configured to perform step 302 in FIG. 3.

In an example embodiment not according to the invention, the processing instruction includes a first instruction. The first instruction includes the identifier of the target YANG package. The first instruction is used to instruct to read one or more YANG modules in the at least two service-related YANG modules from the target YANG package corresponding to the identifier of the target YANG package.

The apparatus is shown in FIG. 20. The apparatus further includes:
a receiving module 1904, configured to receive the one or more YANG modules and a schema or schemas corresponding to the one or more YANG modules.

In the invention, the processing instruction further includes a second instruction. The second instruction includes the identifier of the target YANG package. The second instruction is used to instruct to load the target YANG package corresponding to the identifier of the target YANG package.

In the invention, the second instruction further includes a loading location. The second instruction is used to instruct to load, at the loading location, the target YANG package corresponding to the identifier of the target YANG package.

In the invention, the second instruction further carries a command-line interface (CLI) script file. The script file is used to convert the YANG module in the target YANG package into a CLI script.

In an example embodiment not according to the invention, the processing instruction further includes a third instruction. The third instruction includes the identifier of the target YANG package. The third instruction is used to instruct to query a YANG package that has a dependency relationship with the target YANG package corresponding to the identifier of the target YANG package.

As shown in FIG. 20, the apparatus further includes:
the receiving module 1904, configured to receive a list of first YANG packages on which the target YANG package depends or a list of second YANG packages depending on the target YANG package.

The receiving module 1904 is configured to perform a receiving step performed by the first network device in step 304 in FIG. 3.

In an example embodiment not according to the invention, the processing instruction further includes a fourth instruction. The fourth instruction includes the identifier of the target YANG package. The fourth instruction is used to instruct to delete the target YANG package corresponding to the identifier of the target YANG package and a third YANG package that depends on the target YANG package.

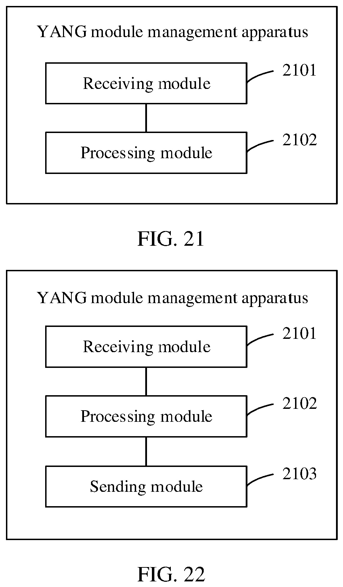

An embodiment of this application provides a YANG module management apparatus. The apparatus is used in a second network device. The second network device is configured to perform functions performed by the second network device in FIG. 3. As shown in FIG. 21, the apparatus includes:
a receiving module 2101, configured to perform step 303 in FIG. 3, that is, configured to receive a processing instruction for a target YANG package, where the target YANG package includes at least two service-related YANG modules, the processing instruction is sent by a first network device, and includes an identifier of the target YANG package, the identifier of the target YANG package is used to identify the target YANG package, and the identifier of the target YANG package includes a name of the target YANG package, or the name and version information of the target YANG package; and
a processing module 2102, configured to perform step 304 in FIG. 3, that is, configured to process the target YANG package corresponding to the identifier of the target YANG package according to the processing instruction.

In an example embodiment not according to the invention, the processing instruction includes a first instruction. The first instruction includes the identifier of the target YANG package. The first instruction is used to instruct to read one or more YANG modules in the at least two service-related YANG modules from the target YANG package corresponding to the identifier of the target YANG package.

The processing module 2102 is further configured to read, according to the first instruction, the one or more YANG modules in the at least two service-related YANG modules corresponding to the identifier of the target YANG package and a corresponding schema or schemas.

As shown in FIG. 22, the apparatus further includes:
a sending module 2103, configured to send the one or more YANG modules and the corresponding schema or schemas to the first network device.

In the invention, the processing instruction further includes a second instruction. The second instruction includes the identifier of the target YANG package. The second instruction is used to instruct to load the target YANG package corresponding to the identifier of the target YANG package.

The processing module 2102 is further configured to load the target YANG package corresponding to the identifier of the target YANG package according to the second instruction.

The second instruction further includes a loading location. The second instruction is used to instruct to load, at the loading location, the target YANG package corresponding to the identifier of the target YANG package.

The processing module 2102 is configured to load, at the loading location, the target YANG package corresponding to the identifier of the target YANG package according to the second instruction.

In the invention, the second instruction further carries a CLI script file. The script file is used to convert the YANG module in the target YANG package into a CLI script.

The processing module 2102 is further configured to convert the YANG module in the target YANG package into the CLI script according to the CLI script file.

In an example embodiment not according to the invention, the processing instruction further includes a third instruction. The third instruction includes the identifier of the target YANG package. The third instruction is used to instruct to query a YANG package that has a dependency relationship with the target YANG package corresponding to the identifier of the target YANG package.

The processing module 2102 is further configured to query, according to the third instruction, a list of first YANG packages on which the target YANG package depends or a list of second YANG packages depending on the target YANG package.

As shown in FIG. 22, the apparatus further includes:
the sending module 2103, configured to send, to the first network device, the list of first YANG packages on which the target YANG package depends or the list of second YANG packages depending on the target YANG package.

In an example embodiment not according to the invention, the processing instruction further includes a fourth instruction. The fourth instruction includes the identifier of the target YANG package. The fourth instruction is used to instruct to delete the target YANG package corresponding to the identifier of the target YANG package and a second YANG package that depends on the target YANG package.

The processing module 2102 is further configured to delete, according to the fourth instruction, the target YANG package corresponding to the identifier of the target YANG package and a third YANG package that depends on the target YANG package.

The sending module 2103 is configured to perform a sending step performed by the second network device in step 304 in FIG. 3.

It should be understood that division into the foregoing functional modules is merely used as an example for description when the apparatuses provided in FIG. 19 to FIG. 22 implement functions of the apparatuses. In actual application, the foregoing functions may be allocated to different functional modules based on requirements. In other words, an inner structure of a device is divided into the different functional modules, to implement all or some of the functions described above. In addition, the apparatus in the foregoing embodiments and the method embodiments are based on a same concept. For a specific implementation process, refer to the method embodiments. Details are not described herein again.

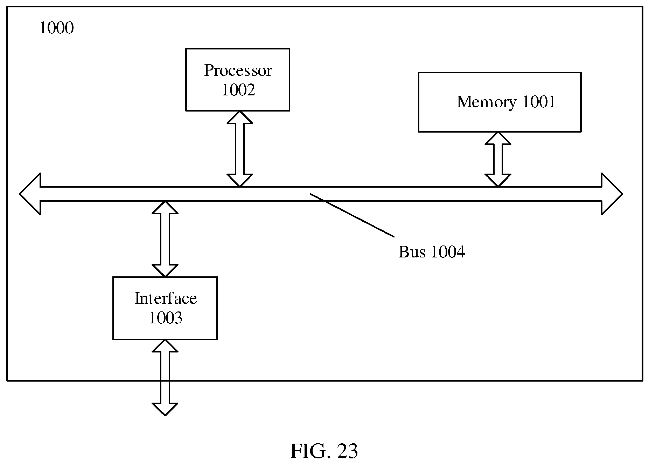

As shown in FIG. 23, an embodiment of this application provides a network device 1000. The network device 1000 shown in FIG. 23 is configured to perform operations in the foregoing network device management method. The network device 1000 includes a memory 1001, a processor 1002, and an interface 1003. The memory 1001, the processor 1002, and the interface 1003 are connected through a bus 1004.

The memory 1001 stores at least one instruction, and the processor 1002 loads and executes the at least one instruction to implement any one of the foregoing YANG module management methods.

The interface 1003 is configured to communicate with another device in a network. The interface 1003 may be implemented in a wireless or wired manner. For example, the interface 1003 may be a network adapter. For example, the network device 1000 may communicate with a server through the interface 1003.

For example, when the network device 1000 is a first network device, the processor 1002 may be configured to perform functions of the determining module 1901 and the generation module 1902 shown in FIG. 19 and FIG. 20, and the interface 1003 is configured to implement functions of the sending module 1903 and the receiving module 1904 shown in FIG. 19 and FIG. 20. When the network device 1000 is a second network device, the processor 1002 may be configured to perform functions of the processing module 2102 shown in FIG. 21 and FIG. 22, and the interface 1003 is configured to implement functions of the receiving module 2101 and the sending module 2103 shown in FIG. 21 and FIG. 22.

It should be understood that FIG. 23 shows only a simplified design of the network device 1000. In actual application, the network device may include any quantity of interfaces, processors, or memories. In addition, the processor may be a central processing unit (Central Processing Unit, CPU), or may be another general-purpose processor, a digital signal processor (digital signal processing, DSP), an application-specific integrated circuit (application specific integrated circuit, ASIC), a field-programmable gate array (field-programmable gate array, FPGA), or another programmable logic device, a discrete gate or transistor logic device, a discrete hardware component, or the like. The general-purpose processor may be a microprocessor, any conventional processor, or the like. It should be noted that the processor may be a processor that supports an advanced reduced instruction set computing machine (advanced RISC machines, ARM) architecture.

Further, in an optional embodiment, the foregoing memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external buffer. For example but not limitation, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A YANG module management system is further provided. The system includes a first network device and a second network device. The first network device is configured to perform functions performed by the first network device in the foregoing YANG module management method. The second network device is configured to perform functions performed by the second network device in the foregoing YANG module management method.

A computer-readable storage medium is further provided. The storage medium stores at least one instruction, and a processor loads and executes the instruction to implement any foregoing YANG module management method.

This application provides a computer program. When the computer program is executed by a computer, a processor or the computer may be enabled to perform corresponding operations and/or procedures in the foregoing method embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk), or the like.

## Claims

1. A YANG module management method, wherein the method comprises:
determining (301), by a first network device being a network management device, a target YANG package in a second network device being a managed device, wherein the target YANG package comprises at least two service-related YANG modules; and
generating (302), by the first network device, a processing instruction for the target YANG package, and sending the processing instruction to the second network device, wherein the processing instruction comprises an identifier of the target YANG package, the identifier of the target YANG package is used to identify the target YANG package, and the identifier of the target YANG package comprises a name of the target YANG package, or the name and version information of the target YANG package, and
wherein the processing instruction comprises:
an instruction used to instruct to load the target YANG package corresponding to the identifier of the target YANG package, wherein the instruction comprises a loading location used to instruct to load at the loading location the target YANG package corresponding to the identifier of the target YANG package, and wherein the instruction carries a command-line interface, **CLI,** script file used to convert the YANG modules in the target YANG package into a **CLI** script.

2. A YANG module management method, wherein the method comprises:
receiving (303), by a second network device being a managed device, a processing instruction for a target YANG package, wherein the target YANG package comprises at least two service-related YANG modules, the processing instruction is sent by a first network device being a network management device, and comprises an identifier of the target YANG package, the identifier of the target YANG package is used to identify the target YANG package, and the identifier of the target YANG package comprises a name of the target YANG package, or the name and version information of the target YANG package,
wherein the processing instruction comprises:
an instruction used to instruct to load the target YANG package corresponding to the identifier of the target YANG package, wherein the instruction comprises a loading location used to instruct to load at the loading location the target YANG package corresponding to the identifier of the target YANG package, and wherein the instruction carries a command-line interface, **CLI,** script file used to convert the YANG modules in the target YANG package into a **CLI** script; and
processing (304), by the second network device, the target YANG package corresponding to the identifier of the target YANG package according to the processing instruction.

3. A YANG module management apparatus, wherein the apparatus is used in a first network device being a network management device, and the apparatus comprises:
a determining module (1901), configured to determine a target YANG package in a second network device being a managed device, wherein the target YANG package comprises at least two service-related YANG modules;
a generation module (1902), configured to generate a processing instruction for the target YANG package, wherein the processing instruction comprises an identifier of the target YANG package, the identifier of the target YANG package is used to identify the target YANG package, and the identifier of the target YANG package comprises a name of the target YANG package, or the name and version information of the target YANG package,
wherein the processing instruction comprises:
an instruction used to instruct to load the target YANG package corresponding to the identifier of the target YANG package, wherein the instruction comprises a loading location used to instruct to load at the loading location the target YANG package corresponding to the identifier of the target YANG package, and wherein the instruction carries a command-line interface, **CLI,** script file used to convert the YANG modules in the target YANG package into a **CLI** script; and
a sending module (1903), configured to send the processing instruction to the second network device.

4. A YANG module management apparatus, wherein the apparatus is used in a second network device being a managed device, and the apparatus comprises:
a receiving module (2101), configured to receive a processing instruction for a target YANG package, wherein the target YANG package comprises at least two service-related YANG modules, the processing instruction is sent by a first network device being a network management device, and comprises an identifier of the target YANG package, the identifier of the target YANG package is used to identify the target YANG package, and the identifier of the target YANG package comprises a name of the target YANG package, or the name and version information of the target YANG package, wherein the processing instruction comprises:
an instruction used to instruct to load the target YANG package corresponding to the identifier of the target YANG package, wherein the instruction comprises a loading location used to instruct to load at the loading location the target YANG package corresponding to the identifier of the target YANG package, and wherein the instruction carries a command-line interface, CLI, script file used to convert the YANG modules in the target YANG package into a CLI script; and
a processing module (2102), configured to process the target YANG package corresponding to the identifier of the target YANG package according to the processing instruction.

5. The apparatus according to claim 4, wherein the processing module (2102) is further configured to load the target YANG package corresponding to the identifier of the target YANG package according to the instruction, and, wherein the instruction further comprises a loading location; and the instruction is used to instruct to load, at the loading location, the target YANG package corresponding to the identifier of the target YANG package; and
the processing module (2102) is configured to load, at the loading location, the target YANG package corresponding to the identifier of the target YANG package according to the instruction.

6. A YANG module management system, wherein the system comprises a first network device and a second network device; and
the first network device performs the method according to any one of claim 1, and the second network device performs the method according to any one of claim 2.

## Patentansprüche

1. YANG-Modulverwaltungsverfahren, wobei das Verfahren Folgendes umfasst:
Bestimmen (301) eines Ziel-YANG-Pakets in einer zweiten Netzwerkvorrichtung, die eine verwaltete Vorrichtung ist, durch eine erste Netzwerkvorrichtung, die eine Netzwerkverwaltungsvorrichtung ist, wobei das Ziel-YANG-Paket mindestens zwei dienstbezogene YANG-Module umfasst; und
Generieren (302) einer Verarbeitungsanweisung für das Ziel-YANG-Paket durch die erste Netzwerkvorrichtung und Senden der Verarbeitungsanweisung an die zweite Netzwerkvorrichtung, wobei die Verarbeitungsanweisung eine Kennung des Ziel-YANG-Pakets umfasst, die Kennung des Ziel-YANG-Pakets verwendet wird, um das Ziel-YANG-Paket zu identifizieren, und die Kennung des Ziel-YANG-Pakets einen Namen des Ziel-YANG-Pakets oder den Namen und die Versionsinformationen des Ziel-YANG-Pakets umfasst, und
wobei die Verarbeitungsanweisung Folgendes umfasst:
eine Anweisung, die verwendet wird, um anzuweisen, das Ziel-YANG-Paket zu laden, das der Kennung des Ziel-YANG-Pakets entspricht, wobei die Anweisung eine Ladestelle umfasst, die verwendet wird, um anzuweisen, an der Ladestelle das Ziel-YANG-Paket zu laden, das der Kennung des Ziel-YANG-Pakets entspricht, und wobei die Anweisung eine Befehlszeilenschnittstelle (CLI) in Form einer Skriptdatei trägt, die verwendet wird, um die YANG-Module in dem Ziel-YANG-Paket in ein CLI-Skript umzuwandeln.

2. YANG-Modulverwaltungsverfahren, wobei das Verfahren Folgendes umfasst:
Empfangen (303) einer Verarbeitungsanweisung für ein Ziel-YANG-Paket durch eine zweite Netzwerkvorrichtung, die eine verwaltete Vorrichtung ist, wobei das Ziel-YANG-Paket mindestens zwei dienstbezogene YANG-Module umfasst, die Verarbeitungsanweisung durch eine erste Netzwerkvorrichtung, die eine Netzwerkverwaltungsvorrichtung ist, gesendet wird und eine Kennung des Ziel-YANG-Pakets umfasst, die Kennung des Ziel-YANG-Pakets verwendet wird, um das Ziel-YANG-Paket zu identifizieren, und die Kennung des Ziel-YANG-Pakets einen Namen des Ziel-YANG-Pakets oder den Namen und die Versionsinformationen des Ziel-YANG-Pakets umfasst,
wobei die Verarbeitungsanweisung Folgendes umfasst:
eine Anweisung, die verwendet wird, um anzuweisen, das Ziel-YANG-Paket zu laden, das der Kennung des Ziel-YANG-Pakets entspricht, wobei die Anweisung eine Ladestelle umfasst, die verwendet wird, um anzuweisen, an der Ladestelle das Ziel-YANG-Paket zu laden, das der Kennung des Ziel-YANG-Pakets entspricht, und wobei die Anweisung eine Befehlszeilenschnittstelle (CLI) in Form einer Skriptdatei trägt, die verwendet wird, um die YANG-Module in dem Ziel-YANG-Paket in ein CLI-Skript umzuwandeln; und
Verarbeiten (304) des YANG-Zielpakets, das der Kennung des YANG-Zielpakets entspricht, durch die zweite Netzwerkvorrichtung gemäß der Verarbeitungsanweisung.

3. YANG-Modulverwaltungsgerät, wobei das Gerät in einer ersten Netzwerkvorrichtung verwendet wird, die eine Netzwerkverwaltungsvorrichtung ist, und das Gerät Folgendes umfasst:
ein Bestimmungsmodul (1901), das dazu konfiguriert ist, ein Ziel-YANG-Paket in einer zweiten Netzwerkvorrichtung zu bestimmen, die eine verwaltete Vorrichtung ist, wobei das Ziel-YANG-Paket mindestens zwei dienstbezogene YANG-Module umfasst; ein Generierungsmodul (1902), das dazu konfiguriert ist, eine Verarbeitungsanweisung für das Ziel-YANG-Paket zu generieren, wobei die Verarbeitungsanweisung eine Kennung des Ziel-YANG-Pakets umfasst, die Kennung des Ziel-YANG-Pakets verwendet wird, um das Ziel-YANG-Paket zu identifizieren, und die Kennung des Ziel-YANG-Pakets einen Namen des Ziel-YANG-Pakets oder den Namen und die Versionsinformationen des Ziel-YANG-Pakets umfasst,
wobei die Verarbeitungsanweisung Folgendes umfasst:
eine Anweisung, die verwendet wird, um anzuweisen, das Ziel-YANG-Paket zu laden, das der Kennung des Ziel-YANG-Pakets entspricht, wobei die Anweisung eine Ladestelle umfasst, die verwendet wird, um anzuweisen, an der Ladestelle das Ziel-YANG-Paket zu laden, das der Kennung des Ziel-YANG-Pakets entspricht, und wobei die Anweisung eine Befehlszeilenschnittstelle (CLI) in Form einer Skriptdatei trägt, die verwendet wird, um die YANG-Module in dem Ziel-YANG-Paket in ein CLI-Skript umzuwandeln; und
ein Sendemodul (1903), das dazu konfiguriert ist, die Verarbeitungsanweisung an die zweite Netzwerkvorrichtung zu senden.

4. YANG-Modulverwaltungsgerät, wobei das Gerät in einer zweiten Netzwerkvorrichtung verwendet wird, die eine verwaltete Vorrichtung ist, und das Gerät Folgendes umfasst:
ein Empfangsmodul (2101), das dazu konfiguriert ist, eine Verarbeitungsanweisung für ein Ziel-YANG-Paket zu empfangen, wobei das Ziel-YANG-Paket mindestens zwei dienstbezogene YANG-Module umfasst, die Verarbeitungsanweisung durch eine erste Netzwerkvorrichtung, die eine Netzwerkverwaltungsvorrichtung ist, gesendet wird und eine Kennung des Ziel-YANG-Pakets umfasst, die Kennung verwendet wird, um das Ziel-YANG-Paket zu identifizieren, und die Kennung des Ziel-YANG-Pakets einen Namen des Ziel-YANG-Pakets oder den Namen und die Versionsinformationen des Ziel-YANG-Pakets umfasst, wobei die Verarbeitungsanweisung Folgendes umfasst:
eine Anweisung, die verwendet wird, um anzuweisen, das Ziel-YANG-Paket zu laden, das der Kennung des Ziel-YANG-Pakets entspricht, wobei die Anweisung eine Ladestelle umfasst, die verwendet wird, um anzuweisen, an der Ladestelle das Ziel-YANG-Paket zu laden, das der Kennung des Ziel-YANG-Pakets entspricht, und wobei die Anweisung eine Befehlszeilenschnittstelle (CLI) in Form einer Skriptdatei trägt, die verwendet wird, um die YANG-Module in dem Ziel-YANG-Paket in ein CLI-Skript umzuwandeln; und
ein Verarbeitungsmodul (2102), das dazu konfiguriert ist, das Ziel-YANG-Paket entsprechend der Kennung des Ziel-YANG-Pakets gemäß der Verarbeitungsanweisung zu verarbeiten.

5. Gerät nach Anspruch 4, wobei das Verarbeitungsmodul (2102) ferner dazu konfiguriert ist, das Ziel-YANG-Paket, das der Kennung des Ziel-YANG-Pakets entspricht, gemäß der Anweisung zu laden, und wobei die Anweisung ferner eine Ladestelle umfasst; und die Anweisung verwendet wird, um das Ziel-YANG-Paket, das der Kennung des Ziel-YANG-Pakets entspricht, an der Ladestelle zu laden; und
das Verarbeitungsmodul (2102) dazu konfiguriert ist, das Ziel-YANG-Paket, das der Kennung des Ziel-YANG-Pakets entspricht, an der Ladestelle zu laden.

6. YANG-Modulverwaltungssystem, wobei das System eine erste Netzwerkvorrichtung und eine zweite Netzwerkvorrichtung umfasst; und
die erste Netzwerkvorrichtung das Verfahren nach einem von Anspruch 1 durchführt und die zweite Netzwerkvorrichtung das Verfahren nach einem von Anspruch 2 durchführt.

## Revendications

1. Procédé de gestion de module YANG, dans lequel le procédé comprend :
la détermination (301), par un premier dispositif réseau étant un dispositif de gestion de réseau, d'un package YANG cible dans un second dispositif réseau étant un dispositif géré, dans lequel le package YANG cible comprend au moins deux modules YANG relatifs à un service ; et
la génération (302), par le premier dispositif réseau, d'une instruction de traitement pour le package YANG cible, et l'envoi de l'instruction de traitement au second dispositif réseau, dans lequel l'instruction de traitement comprend un identifiant du package YANG cible, l'identifiant du package YANG cible est utilisé pour identifier le package YANG cible, et l'identifiant du package YANG cible comprend un nom du package YANG cible, ou le nom et les informations de version du package YANG cible, et dans lequel l'instruction de traitement comprend :
une instruction utilisée pour ordonner de charger le package YANG cible correspondant à l'identifiant du package YANG cible, dans lequel l'instruction comprend un emplacement de chargement utilisé pour ordonner de charger, à l'emplacement de chargement, le package YANG cible correspondant à l'identifiant du package YANG cible, et dans lequel l'instruction contient un fichier de script d'interface de ligne de commande, CLI, utilisé pour convertir les modules YANG dans le package YANG cible en un script CLI.

2. Procédé de gestion de module YANG, dans lequel le procédé comprend :
la réception (303), par un second dispositif réseau étant un dispositif géré, d'une instruction de traitement pour un package YANG cible, dans lequel le package YANG cible comprend au moins deux modules YANG relatifs à un service, l'instruction de traitement est envoyée par un premier dispositif réseau étant un dispositif de gestion de réseau, et comprend un identifiant du package YANG cible, l'identifiant du package YANG cible est utilisé pour identifier le package YANG cible, et l'identifiant du package YANG cible comprend un nom du package YANG cible, ou le nom et les informations de version du package YANG cible,
dans lequel l'instruction de traitement comprend :
une instruction utilisée pour ordonner de charger le package YANG cible correspondant à l'identifiant du package YANG cible, dans lequel l'instruction comprend un emplacement de chargement utilisé pour ordonner de charger, à l'emplacement de chargement, le package YANG cible correspondant à l'identifiant du package YANG cible, et dans lequel l'instruction contient un fichier de script d'interface de ligne de commande, CLI, utilisé pour convertir les modules YANG dans le package YANG cible en un script CLI ; et
le traitement (304), par le second dispositif réseau, du package YANG cible correspondant à l'identifiant du package YANG cible selon l'instruction de traitement.

3. Appareil de gestion de module YANG, dans lequel l'appareil est utilisé dans un premier dispositif réseau étant un dispositif de gestion de réseau, et l'appareil comprend :
un module de détermination (1901), configuré pour déterminer un package YANG cible dans un second dispositif réseau étant un dispositif géré, dans lequel le package YANG cible comprend au moins deux modules YANG relatifs à un service ;
un module de génération (1902), configuré pour générer une instruction de traitement pour le package YANG cible, dans lequel l'instruction de traitement comprend un identifiant du package YANG cible, l'identifiant du package YANG cible est utilisé pour identifier le package YANG cible, et l'identifiant du package YANG cible comprend un nom du package YANG cible, ou le nom et les informations de version du package YANG cible,
dans lequel l'instruction de traitement comprend :
une instruction utilisée pour ordonner de charger le package YANG cible correspondant à l'identifiant du package YANG cible, dans lequel l'instruction comprend un emplacement de chargement utilisé pour ordonner de charger, à l'emplacement de chargement, le package YANG cible correspondant à l'identifiant du package YANG cible, et dans lequel l'instruction contient un fichier de script d'interface de ligne de commande, CLI, utilisé pour convertir les modules YANG dans le package YANG cible en un script CLI ; et
un module d'envoi (1903), configuré pour envoyer l'instruction de traitement au second dispositif réseau.

4. Appareil de gestion de module YANG, dans lequel l'appareil est utilisé dans un second dispositif réseau étant un dispositif géré, et l'appareil comprend :
un module de réception (2101), configuré pour recevoir une instruction de traitement pour un package YANG cible, dans lequel le package YANG cible comprend au moins deux modules YANG relatifs à un service, l'instruction de traitement est envoyée par un premier dispositif réseau étant un dispositif de gestion de réseau, et comprend un identifiant du package YANG cible, l'identifiant du package YANG cible est utilisé pour identifier le package YANG cible, et l'identifiant du package YANG cible comprend un nom du package YANG cible, ou le nom et les informations de version du package YANG cible, dans lequel l'instruction de traitement comprend :
une instruction utilisée pour ordonner de charger le package YANG cible correspondant à l'identifiant du package YANG cible, dans lequel l'instruction comprend un emplacement de chargement utilisé pour ordonner de charger, à l'emplacement de chargement, le package YANG cible correspondant à l'identifiant du package YANG cible, et dans lequel l'instruction contient un fichier de script d'interface de ligne de commande, CLI, utilisé pour convertir les modules YANG dans le package YANG cible en un script CLI ; et
un module de traitement (2102), configuré pour traiter le package YANG cible correspondant à l'identifiant du package YANG cible selon l'instruction de traitement.

5. Appareil selon la revendication 4, dans lequel le module de traitement (2102) est également configuré pour charger le package YANG cible correspondant à l'identifiant du package YANG cible selon l'instruction, et dans lequel l'instruction comprend également un emplacement de chargement ; et l'instruction est utilisée pour ordonner de charger, à l'emplacement de chargement, le package YANG cible correspondant à l'identifiant du package YANG cible ; et
le module de traitement (2102) est configuré pour charger, à l'emplacement de chargement, le package YANG cible correspondant à l'identifiant du package YANG cible selon l'instruction.

6. Système de gestion de module YANG, dans lequel le système comprend un premier dispositif réseau et un second dispositif réseau ; et
le premier dispositif réseau réalise le procédé selon l'une quelconque de la revendication 1, et le second dispositif réseau réalise le procédé selon l'une quelconque de la revendication 2.
